# EUROPEAN PATENT APPLICATION

(11) **EP 4 592 657 A1**
(43) Date of publication of application: **30.07.2025**
(21) Application number: 23867435.2
(22) Date of filing: 18.09.2023
(51) Int. Cl.: G01L 5/00, B64F 5/60

(54) **MEASURING DEVICE**

(30) Priority: 19.09.2022 CN 202222479471 U
(71) Applicant: Autoflight (Kunshan) Co., Ltd., Suzhou, Jiangsu 215345 (CN)
(72) Inventor: TIAN, Yu, Suzhou, Jiangsu 215345 (CN); LIANG, Hongbo, Suzhou, Jiangsu 215345 (CN)
(74) Representative: MERH-IP Matias Erny Reichl Hoffmann Patentanwälte PartG mbB
(86) International application number: PCT/CN2023/119320
(87) International publication number: WO 2024/061146

(57) **Abstract**

A testing device to test a component to be tested. The component to be tested comprises a motor and a propeller, and the propeller is connected to an output end of the motor. The testing device comprising a bottom plate; a transmission mechanism comprising a transmission shaft and a support seat, and the transmission shaft is used to connect the motor and the support seat, and the support seat is used to support the transmission shaft, and the support seat is slidably connected to the bottom plate; a first sensor arranged on the bottom plate, and the transmission mechanism is configured to move along an axial direction of the transmission shaft and abut against the first sensor, so that the first sensor measures the pulling force or thrust of the component to be tested; a second sensor, an end of the second sensor is coaxially connected to the transmission shaft, and an other end of the second sensor is connected to the support seat, and the transmission shaft is configured to drive the second sensor to rotate, so that the second sensor measures the torque of the component to be tested.

## Description

### FIELD OF THE DISCLOSURE

The invention relates to the technical field of testing, in particular to a testing device.

### BACKGROUND OF THE INVENTION

With the booming development of the drone industry, drones have higher and higher requirements for the safety and reliability of motors. All motors produced need to be tested for torque to ensure the motor's performance before they leave the factory. Torque testing equipment is usually used to test the performance of drone motors. The mainly used testing equipment on the market is suitable for small drone motors. For large or extra-large drone motors, their large size causes the test shaft to be top-heavy and unbalanced, resulting in large errors. Therefore, it is urgent to invent a testing equipment suitable for large drone motors with better testing accuracy.

### SUMMARY OF THE INVENTION

The purpose of the invention is to provide a testing device. The testing device of the present invention can accurately measure the push-pull force and torque of the propeller motor.

For this purpose, the present invention provides a testing device to test a component to be tested, wherein the component to be tested comprises a motor and a propeller, and the propeller is connected to the output end of the motor, wherein the testing device comprises: a bottom plate; a transmission mechanism comprising a transmission shaft and a support seat, wherein the transmission shaft is used to connect the motor and the support seat, the support seat is used to support the transmission shaft, and the support seat is slidably connected to the bottom plate; a first sensor arranged on the bottom plate, and the transmission mechanism is configured to move along an axial direction of the transmission shaft and abut against the first sensor, so that the first sensor measures the pulling force or thrust of the component to be tested; a second sensor, wherein an end of the second sensor is coaxially connected to the transmission shaft and an other end of the second sensor is connected to the support seat, wherein the transmission shaft is configured to drive the second sensor to rotate so that the second sensor measures the torque of the component to be tested.

Preferably, the bottom plate is provided with a line slide rail, a transmission plate is set on the line slide rail, the support seat is set on the transmission plate, and the transmission plate is slidably connected to the bottom plate through the line slide rail.

Preferably, the transmission plate is provided with a force transmission block, and the force transmission block abuts against and connects to the first sensor, and it is used to pull or push the first sensor, so that the first sensor measures the pulling force or thrust of the component to be tested accordingly.

Preferably, the support seat comprises a first support seat and a second support seat, the transmission shaft passes through the first support seat and is rotatably connected to the first support seat, and the second support seat is connected to the end of the second sensor away from the transmission shaft.

Preferably, the number of first support seats is multiple, and the first support seats are used to support the transmission shaft.

Preferably, the number of first support seats is a pair, and a transmission shaft chain ring part is arranged between the pair of first support seats. The transmission shaft chain ring part is fixedly connected to the transmission shaft and rotates with the transmission shaft.

Preferably, a gasket is provided between the transmission shaft chain ring part and each first support seat.

Preferably, the transmission shaft is provided with a coupling at an end close to the second sensor.

Preferably, the transmission shaft is sleeved with a linear bearing.

Preferably, a motor support assembly is further provided on one side of the transmission shaft connected to the motor, and the motor support assembly is used to fix the motor.

In the testing device of the present invention, the motor drives the propeller to rotate, and the motor with the propeller will generate a pulling force or a thrust on the transmission shaft. Under the action of the pulling force or the thrust, the transmission shaft can move along its own axial direction, thereby abutting against the first pressure sensor, and the first pressure sensor can measure the magnitude of the pulling force or the thrust. The component to be tested can generate a torque to drive the transmission shaft to rotate, and the transmission shaft drives the second sensor, thereby measuring the torque. In the testing device provided by the invention, the first pressure sensor and the second pressure sensor do not affect each other, thereby improving the measurement accuracy.

### BRIEF DESCRIPTION OF DRAWINGS

FIG. 1 is a schematic diagram of the testing device according to an embodiment of the present invention;
FIG. 2 is a bottom view of the testing device according to an embodiment of the present invention;
FIG. 3 is a side view of the testing device according to an embodiment of the present invention;
FIG. 4 is a partially enlarged view of position A in FIG. 3.

### DETAILED DESCRIPTION

The following describes the implementation methods of the present invention through specific examples. Those skilled in the art can easily understand other advantages and effects of the present invention from the contents disclosed in this specification. The present invention can also be implemented or applied through other different specific implementation methods. The details in this specification can also be modified or changed based on different viewpoints and invention systems without departing from the spirit of the present invention. It should be noted that the embodiments and features in the embodiments of the present invention can be combined with each other without conflict.

The following is a detailed description of the embodiments of the present invention with reference to the accompanying drawings so that those skilled in the art can easily implement the present invention. The present invention can be embodied in a variety of different forms and is not limited to the embodiments described herein.

In order to clearly describe the present invention, components irrelevant to the description are omitted, and the same reference symbols are given to the same or similar components throughout the specification.

Throughout the specification, when a device is said to be "connected" to another device, this includes not only the case of "direct connection" but also the case of "indirect connection" by placing other elements therebetween. In addition, when a device is said to "include" a certain component, unless otherwise stated, it does not exclude other components, but means that other components may be included.

When a device is said to be "on" another device, it may be directly on the other device, but there may also be other devices between it. In contrast, when a device is said to be "directly" on another device, there are no other devices between it.

Although the terms first, second, etc. are used to describe various elements in some examples, these elements should not be limited by these terms. These terms are only used to distinguish one element from another element. For example, the first interface and the second interface are described. Moreover, as used in this article, the singular forms "one", "one" and "the" are intended to also include plural forms, unless there is an opposite indication in the context. It should be further understood that the terms "comprising" and "including" indicate that there are the described features, steps, operations, elements, components, projects, kinds, and/or groups, but do not exclude the existence, occurrence or addition of one or more other features, steps, operations, elements, components, projects, kinds, and/or groups. The terms "or" and "and/or" used herein are interpreted as inclusive, or mean any one or any combination. Therefore, "A, B or C" or "A, B and/or C" means "any of the following: A; B; C; A and B; A and C; B and C; A, B and C". Only when the combination of elements, functions, steps or operations is inherently mutually exclusive in some way, will there be an exception to this definition.

The technical terms used herein are only used to refer to specific embodiments and are not intended to limit the present invention. The singular form used herein also includes the plural form as long as the sentence does not clearly indicate the opposite meaning. The meaning of "including" used in the specification is to specify specific characteristics, regions, integers, steps, operations, elements and/or components, and does not exclude the existence or addition of other characteristics, regions, integers, steps, operations, elements and/or components

Terms indicating relative space, such as "below" and "above", may be used to more easily describe the relationship of one device illustrated in the drawings relative to another device. Such terms refer not only to the meaning indicated in the drawings, but also to other meanings or operations of the device in use. For example, if the device in the drawings is turned over, a device that was described as being "below" other devices is described as being "above" other devices. Therefore, the exemplary term "below" includes both above and below. The device can be rotated 90° or other angles, and the terms indicating relative space are interpreted accordingly.

Although not defined differently, all terms, including technical and scientific terms, used herein have the same meaning as those generally understood by those skilled in the art to which this invention belongs. Terms defined in commonly used dictionaries are additionally interpreted as having meanings consistent with the relevant technical literature and the contents of the current disclosure, and unless defined, shall not be overly interpreted as ideal or very formal meanings.

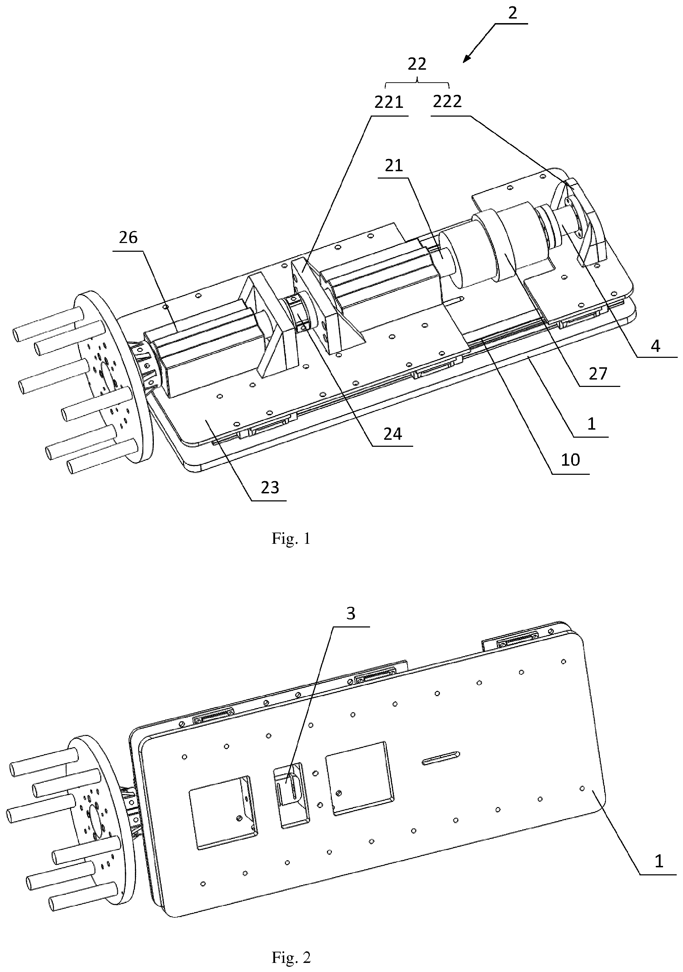

The present embodiment provides a testing device for testing the push-pull force and torque of a component to be tested, wherein the component to be tested includes a motor and a propeller, wherein the propeller is connected to the output end of the motor, and the motor can drive the propeller to rotate. As shown in Figures 1 and 2, the testing device includes a bottom plate 1, a transmission mechanism 2, a first sensor 3, and a second sensor 4. The transmission mechanism 2 includes a transmission shaft 21 and a support seat 22. The transmission shaft 21 is connected to the motor (not shown in the figure) and the support seat 22. The support seat 22 is slidably connected to the bottom plate 1, and the support seat 22 is used to support the transmission shaft 21. The first sensor 3 is arranged on the bottom plate 1, and the transmission mechanism 2 can move along the axial direction of the transmission shaft 21, and it abuts against and connects to the first sensor 3, so that the first sensor 3 measures the pulling force or thrust of the component to be tested. One end of the second sensor 4 is coaxially connected to the transmission shaft 21, and the other end of the second sensor 4 is connected to the support seat 22. The transmission shaft 21 can drive the second sensor 4 to rotate, so that the second sensor 4 measures the tension or thrust of the component to be tested.

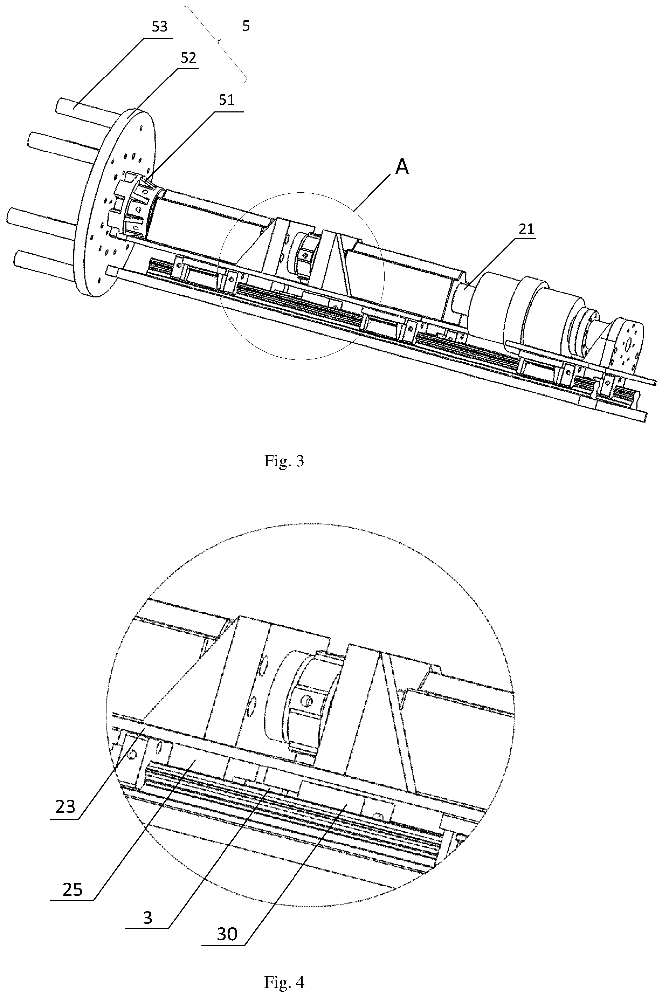

Specifically, the motor of the component to be tested drives the propeller to rotate, and the motor is connected to the transmission shaft 21. The rotation of the propeller will generate a pulling force or a thrust on the transmission shaft 21. Under the action of the pulling force or the thrust, the transmission shaft 21 can move along its own axial direction, and the magnitude of the pulling force or the thrust is measured by the first sensor 3. In this embodiment, the support seat 22 includes a first support seat 221 and a second support seat 222. More specifically, the number of first support seats 221 can be multiple, and the plurality of first support seats 221 is used to support the transmission shaft 21 to prevent the transmission shaft 21 from interfering with other components and affecting the measurement results. Preferably, a pair of first support seats 221 is provided. The first support seat 221 and the second support seat 222 can be detachably connected to the transmission plate 23 at the bottom thereof. A line slide rail 10 is set on the bottom plate 1, and the transmission plate 23 is set on the line slide rail 10. The transmission plate 23 is slidably connected to the bottom plate 1 through the line slide rail 10. A transmission shaft chain ring part 24 is set on the transmission shaft 21, and the transmission shaft chain ring part 24 is fixedly connected to the transmission shaft 21 and can rotate with the transmission shaft 21. The transmission shaft chain ring part 24 is sandwiched between two first support seats 221, and the two first support seats 221 hold the transmission shaft chain ring part 24 to move together in the axial direction of the transmission shaft 21, so that the transmission shaft 21 can drive the transmission shaft chain ring part 24, the first support seats 221 on both sides of the transmission shaft chain ring part 24 and the transmission plate 23 to move along the axial direction of the transmission shaft 21 on the line slide rail 10, as shown in FIG. 3 and FIG. 4, a force transmission block 25 is arranged at the bottom of the transmission plate 23, and the force transmission block 25 abuts against and connects to the first sensor 3. In one embodiment, the force transmission block 25 is bolted to the first sensor 3, so that when the transmission mechanism 2 moves along the axial direction of the transmission shaft 21, the force transmission block 25 is driven to pull or push the first sensor 3, so as to measure the pushing force or thrust of the component to be tested. Furthermore, a linear bearing 26 is sleeved on the transmission shaft 21 to reduce the friction of axial and radial movement. The first sensor 3 abuts against a fixing block 30 to stabilize the first sensor 3.

At the same time, as shown in FIG. 3, a motor support assembly 5 is arranged between the transmission shaft 21 and the motor. The motor support assembly 5 includes a fixing seat 51, a fixing plate 52 and a support column 53. The fixing seat 51 is connected to one end of the transmission shaft 21. The size of the fixing plate 52 can be customized according to the diameter of the motor to be tested. The support column 53 is used to support the motor. The transmission shaft 21 is connected to the motor through the motor support assembly 5, which can ensure the connection strength and connection stability between the large-size motor and the transmission shaft 21.

At the same time, the transmission shaft 21 passes through the two first support seats 221 and is rotatably connected to the first support seats 221. A gasket is arranged between the transmission shaft chain ring part 24 on the transmission shaft 21 and each first support seat 221, which can reduce the friction between the transmission shaft chain ring part 24 and each first support seat 221 when the transmission shaft chain ring part 24 rotates with the transmission shaft 21. One end of the second sensor 4 is coaxially connected to the transmission shaft 21, and the other end is fixedly connected to the second support seat 222. The second support seat 222 is used to support the second sensor 4 and the transmission shaft 21. When the motor drives the propeller to rotate, the propeller and the motor generate torque to drive the transmission shaft 21 to rotate, and the transmission shaft 21 drives the second sensor 4 to rotate, thereby measuring the torque.

Furthermore, a coupling 27 is arranged at one end of the transmission shaft 21 close to the second sensor 4. The coupling 27 can be used to adjust the concentricity of the transmission shaft 21 and the second sensor 4, and at the same time, it is used as a safety device to prevent the transmission shaft 21 from being subjected to excessive load and damaging the testing device, thereby playing an overload protection role. In the testing device provided in this embodiment, the first sensor 3 and the second sensor 4 do not affect each other, thus realizing dynamic tension measurement and improving measurement accuracy.

In addition, the testing device can also be installed on a vehicle such as a car. The car is used to drive the testing device to move. The vehicle speed can be changed according to the test requirements to simulate the feedback data of the component to be tested under different flow speeds. In this embodiment, the first sensor is a force sensor. The force sensor produces elastic deformation under the action of external force, causing the resistance strain gauge (conversion element) attached to its surface to also deform. After the resistance strain gauge is deformed, its resistance value will change (increase or decrease), and then the corresponding measurement circuit will convert this resistance change into an electrical signal (voltage or current), thereby completing the process of converting the external force into an electrical signal. The second sensor is a torque sensor. The torque sensor can use the physical quantity to be measured to produce elastic deformation on the elastic element. Therefore, the elastic deformation can be converted into a change in resistance through the strain gauge, thereby testing the torque value.

In the testing device provided by the present invention, the motor drives the propeller to rotate, and the motor and the propeller will generate a pulling force or a thrust on the transmission shaft. Under the action of the pulling force or thrust, the transmission shaft can move along its own axial direction, thereby pulling or pushing the first pressure sensor, and the first pressure sensor can measure the magnitude of the pulling force or the thrust; the component to be tested can generate a torque to drive the transmission shaft to rotate, and the transmission shaft drives the second sensor, thereby measuring the torque. In the testing device provided by the present invention, the first pressure sensor and the second pressure sensor do not affect each other, thereby improving the measurement accuracy.

The above embodiments are merely illustrative of the principles of the present invention and its effects, which is not intended to limit the invention. Any person skilled in the art can modify or alter the above embodiments without departing from the purpose and the scope of the present invention. Accordingly, all equivalent modifications or alterations made by persons having ordinary knowledge in the art, without departing from the purpose and technical ideas disclosed in the present invention, shall still be covered by the claims of the present invention.

## Claims

1. A testing device to test a component to be tested, wherein the component to be tested comprises a motor and a propeller, and the propeller is connected to an output end of the motor, wherein the testing device comprises:
a bottom plate;
a transmission mechanism comprising a transmission shaft and a support seat, wherein the transmission shaft is used to connect the motor and the support seat, the support seat is used to support the transmission shaft, and the support seat is slidably connected to the bottom plate;
a first sensor arranged on the bottom plate, and the transmission mechanism is configured to move along an axial direction of the transmission shaft and abut against the first sensor, so that the first sensor measures a pulling force or a thrust of the component to be tested;
a second sensor, wherein an end of the second sensor is coaxially connected to the transmission shaft and an other end of the second sensor is connected to the support seat, wherein the transmission shaft is configured to drive the second sensor to rotate so that the second sensor measures a torque of the component to be tested.

2. The testing device according to claim 1, wherein the bottom plate is provided with a line slide rail, a transmission plate is set on the line slide rail, the support seat is set on the transmission plate, and the transmission plate is slidably connected to the bottom plate through the line slide rail.

3. The testing device according to claim 2, wherein the transmission plate is provided with a force transmission block, and the force transmission block abuts against and connects to the first sensor, and it is used to pull or push the first sensor, so that the first sensor measures the pulling force or thrust of the component to be tested accordingly.

4. The testing device according to claim 1, wherein the support seat comprises a first support seat and a second support seat, the transmission shaft passes through the first support seat and is rotatably connected to the first support seat, and the second support seat is connected to the end of the second sensor away from the transmission shaft.

5. The testing device according to claim 4, wherein the number of first support seats is multiple, and the first support seats are used to support the transmission shaft.

6. The testing device according to claim 5, wherein the number of first support seats is a pair, and a transmission shaft chain ring part is arranged between the pair of first support seats. The transmission shaft chain ring part is fixedly connected to the transmission shaft and rotates with the transmission shaft.

7. The testing device according to claim 6, wherein a gasket is arranged between the transmission shaft chain ring part and each first support seat.

8. The testing device according to claim 2, wherein a coupling is arranged at an end of the transmission shaft close to the second sensor.

9. The testing device according to claim 2, wherein the transmission shaft is sleeved with a linear bearing.

10. The testing device according to claim 5, wherein a motor support assembly is further provided on one side of the transmission shaft connected to the motor, and the motor support assembly is used to fix the motor.
